# EUROPEAN PATENT APPLICATION

(11) **EP 4 703 632 A1**
(43) Date of publication of application: **04.03.2026**
(21) Application number: 24197940.0
(22) Date of filing: 02.09.2024
(51) Int. Cl.: F21S 43/14, F21S 43/19, F21S 43/237, F21S 43/245, F21S 43/27, F21S 43/50, F21S 45/10, F21S 43/15, B60Q 1/00, B60Q 3/50, B60Q 3/64, B60Q 1/28, B60Q 1/32, F21W 106/00

(54) **LIGHT GUIDING SYSTEM**

(71) Applicant: ZKW Group GmbH, 3250 Wieselburg (AT)
(72) Inventor: Etlinger, Stefan, 3100 St. Pölten (AT); Pritzl, Leopold, 3254 Bergland (AT); Steiner, Eva, 3325 Ferschnitz (AT)
(74) Representative: Patentanwaltskanzlei Matschnig & Forsthuber OG

(57) **Abstract**

The present invention relates to a light guiding system (1a-b) for a vehicle, in particular a motor vehicle, comprising an elongated light-emitting element (2) configured to emit light, an elastically deformable element (3a-b), and a fixation element (5), wherein the elastically deformable element (3a-b) abuts a part of the light-emitting element (2) and/or a part of the fixation element (5), wherein the fixation element (5) holds the light-emitting element (2) and the deformable element (3a-b), wherein the deformable element (3a-b) is configured to subject the light-emitting element (2) to a first tension force when the deformable element (3a-b) is in a first state and has a first restoring force, wherein the deformable element (3a-b) is further configured to subject the light-emitting element (2) to a second tension force when the deformable element (3a-b) is in a second state and has a second restoring force, wherein the second restoring force is higher than the first restoring force, and wherein the second tension force is lower than the first tension force.

## Description

The present invention relates to a light guiding system for a vehicle. Furthermore, the present invention relates to a system comprising the light guiding system, and to a vehicle comprising the light guiding system or the system.

Light guiding systems for illuminating parts of vehicles, such as cars, are commonly known in the art. Such light guiding systems commonly comprise a light-emitting element, e.g. a light guiding element which serves to transmit light from a light source to a predetermined location along the light guiding element where the light is coupled out of the light guiding element. Accordingly, specific parts of the surface of the vehicle can be illuminated, for example to generate light strips.

US 2013/0229814 A1 relates to an illumination device that can be arranged along a contour of a component in a motor vehicle so that the contour of the component is recognizable in the dark as a bright strip.

DE 10 2020 117 202 A1 discloses a holding element for fastening a light guide to a vehicle. The holding element has a base body which is elastically deformable and a receiving device with a recess for receiving the light guide.

EP 2 811 219 A1 concerns a lighting fixture for a vehicle with an elongated light guide element and a base body for securing a light guide element by means of a clamping element.

In US 11,442,212 B2, an optical fiber illumination apparatus is disclosed which is capable of ensuring high light efficiency and uniform luminosity when displaying an illumination pattern with flexible optical fibers in fiber optic lighting.

DE 10 2021117 619 A1 concerns a lighting device for the exterior of a motor vehicle which comprises a housing with a light-permeable cover plate and one or more flexible light guides.

US 11,187,840 B1 discloses an optical fiber apparatus comprising an optical fiber which is wound around a bending induction portion configured to induce a bending deformation of the optical fiber to absorb stretch or contraction of the optical fiber by an outside environment. Accordingly, a change in the length of the optical fiber caused by a high or low temperature environmental condition is compensated which prevents damage and improves durability.

Although such light guiding systems are widely used, they can easily get damaged when subjected to an external force. For example, the collision of a vehicle with an obstacle even at a low speed can cause damage, e.g. breakage, of the light-emitting element and thus failure of the light guiding system, resulting in the need of repair or replacement, even if no further damage or only a minor deformation of the respective vehicle component is visible. It is an object of the present invention to provide a light guiding system with an improved durability, in particular an improved ability to withstand external forces.

The present invention thus relates to a light guiding system for a vehicle, in particular a motor vehicle, comprising an elongated light-emitting element configured to emit light, an elastically deformable element, and a fixation element, wherein the elastically deformable element abuts a part of the light-emitting element and/or a part of the fixation element, wherein the fixation element holds the light-emitting element and the deformable element, wherein the deformable element is configured to subject the light-emitting element to a first tension force when the deformable element is in a first state and has a first restoring force, wherein the deformable element is further configured to subject the light-emitting element to a second tension force when the deformable element is in a second state and has a second restoring force, wherein the second restoring force is higher than the first restoring force, and wherein the second tension force is lower than the first tension force.

In the present disclosure, a light-emitting element is intended to refer to an element capable of emitting light, regardless of whether the light is generated in the light-emitting element, namely by means of a light source comprised in the light-emitting element, or whether the light is introduced into the light-emitting element from an external light source (e.g. a light-emitting diode (LED), a halogen lamp, etc) in which it is generated and subsequently introduced into the light-emitting element (i.e., coupled into the light-emitting element). Examples of light-emitting elements include a light-guiding element (e.g. an optical fiber), an LED strip and a printed circuit board (PCB). The emittance of light from the light-emitting element can also be referred to as the coupling-out of light from the light-emitting element.

A light source is understood herein to be a component capable of generating and radiating light. Examples of light sources include a light bulb, an LED, an incandescent lamp, a halogen lamp, a neon lamp, a laser diode, a fluorescent lamp and a plasma lamp. If the light source is an external light source (i.e., it is not comprised in the light-emitting element), the light generated by the light source can be introduced into the light-emitting element, particularly into an optical fiber. Alternatively, the light source can be comprised in the light-emitting element; examples include an elongated PCB that comprises one or more light source(s) mounted thereon, or an LED strip comprising several LEDs.

According to the present invention, the deformable element is elastically deformable which intends to mean that the deformable element is able to return, at least partially, preferably completely, to its initial state after being deformed (e.g. after being stretched or compressed).

The deformable element being in its first state intends to mean that the light guiding system is not subjected to an external force, particularly to a compression force, a tensile force and/or a shearing force owing to a collision of the vehicle with an obstacle. Thus, in its first state, the deformable element is either not deformed (such that the first restoring force is zero), or it is partially deformed (if the light-emitting element is connected with the deformable element in a manner that the light-emitting element imparts a tension force or a compression force onto the deformable element), preferably 20% or below, more preferably 10% or below, yet more preferably 5% or below, with regard to a maximum possible deformation of the deformable element. For example, if the deformable element is a spring, said spring can be partially compressed or partially stretched in its first state. If the deformable element is partially deformed when it is in its first state, its first restoring force is greater than zero. The restoring force is understood as the force exerted back by the deformable element and directed opposite to the direction of its deformation. For example, the restoring force exerted by a spring is in the opposite direction to its displacement.

When the light guiding system, particularly the light-emitting element, is subjected to an external force, the deformable element is elastically deformed and thereby moves from the first state to a second state. Preferably, the light-emitting element is subjected to an external force and transmits said force onto the deformable element, such that the deformable element moves from the first state to the second state. In said second state, the deformable element is deformed to a higher degree compared to the first state, preferably up to 60%, more preferably up to 70%, yet more preferably up to 80%, even more preferably up to 90%, particularly preferably up to 100% with regard to its maximum possible deformation. The higher the magnitude of the external force (i.e., the higher the impact in the event of a collision of the vehicle with an obstacle), the higher is the deformation of the deformable element. As such, the actual second state to which the deformable element moves can vary. For example, if the deformable element is a spring, the spring can be stretched or compressed upon subjection to the external force (depending inter alia on the spring type and/or on the relative arrangement of the light-emitting element and the spring). As a result of the deformation imparted by the external force, the restoring force of the deformable element increases, such that the second restoring force is higher than the first restoring force.

When the deformable element is in its first state, it subjects the light-emitting element to a first tension force. This allows for the light-emitting element to be firmly held in place, such that any undesired movement of the light-emitting element in the vehicle, particularly relative to the fixation element and/ or the deformable element, can be avoided. When the light guiding system, particularly the light-emitting element, is subjected to an external force (particularly due to a collision of the vehicle with an obstacle) such that the deformable element moves to the second state, the tension force imparted onto the light-emitting element by the deformable element decreases until a second tension force is reached which is lower than the first tension force. Preferably, the second tension force is 20% of the first tension force or below, more preferably 10% of the first tension force or below, yet more preferably 5% of the first tension force or below, particularly preferably zero. The light-emitting element is then no longer firmly held in place by the deformable element. This enhances its degree of freedom to adapt to the external force. Namely, if the light-emitting element is subjected to an external force, the light-emitting element can move in a direction of action of the external force, hereby reducing the impact of the external force onto the light guiding system, particularly the light-emitting element. Surprisingly, this behavior results in a considerably improved durability of the light-emitting element and in consequence the whole light guiding system. Particularly, the risk of irreversible deformation or breakage of the light-emitting element in the event of an impact (such as a collision of the vehicle with an obstacle), especially at a low speed, can be avoided or at least reduced which in turn lowers the need of repair or replacement. The light guiding system according to the present invention thus provides a significant contribution to sustainability.

If the deformable element is a compression spring, the deformable element can abut a part of the light-emitting element and/or a part of the fixation element, such to form a region of contact between the deformable element and the light-emitting element and/or between the deformable element and the fixation element. Whether or not a region of contact is formed between the deformable element and the fixation element depends on the shape of the fixation element. For example, if the fixation element comprises a carrier element extending along the entire length of the light-emitting element, the region of contact is preferably formed between the deformable element and the fixation element. The region of contact can be a line contact, a point contact or a surface contact; preferably, the region of contact is a line contact (which can e.g. be realized by providing a light-emitting element and/or a fixation element with a round cross-section area). When the light-emitting element is subjected to an external force, said external force is transmitted to the deformable element via the region of contact, such that the deformable element moves from the first to the second state, and the tension force to which the light-emitting element is subjected by the deformable element decreases. This leads to a part of a length of the light-emitting element and/or the fixation element initially abutting the deformable element (which part can be referred to as an excess length of the light-emitting element) to become released. That is, said excess length is then no longer in physical contact with the deformable element, resulting in a change (e.g. a decrease) of the region of contact between the deformable element and the light-emitting element and/or between the deformable element and the fixation element. The released excess length allows for an enhanced degree of freedom of the light-emitting element to adapt to the external force by moving in the direction of action of said external force. As such, a damage, particularly a breakage, of the light-emitting element can be avoided.

Preferably, the light-emitting element comprises a visible section and a non-visible section, wherein the deformable element preferably abuts a part of the non-visible section of the light-emitting element and/or a section of the fixation element holding the non-visible section of the light-emitting element. The non-visible section is understood to be a section of the light-emitting element where light cannot be emitted from the light-emitting element, and/or a section of the light-emitting element where light emitted from the light-emitting element is blocked after its emittance from the light-emitting element, such that no light is visible in an environment of the vehicle. A non-visible section where light cannot be emitted from the light-emitting element can e.g. be realized by omitting elements used to couple out light, such as prisms (particularly if the light-emitting element comprises an optical fiber). The environment of the vehicle is understood to be an external environment of the vehicle (such that an illumination is visible at least to other road users) and/or an internal environment of the vehicle (such that an illumination is visible at least to passengers of the vehicle). That the deformable element preferably abuts a part of the non-visible section of the light-emitting element and/or a section of the fixation element holding the non-visible section signifies that the deformable element is not visible from the environment of the vehicle. This is advantageous in that the emittance of light from the visible section is not disturbed and/or interrupted. Accordingly, a homogeneous illumination is visible from the environment of the vehicle. A non-visible section where light emitted from the light-emitting element is blocked after its emittance is preferably realized in that the light guiding system comprises a light-blocking element attached to and/or connected with a part of the fixation element and/or a part of the light-emitting element, and/or in that the fixation element comprises a light-blocking element. This effectively prevents undesired visibility of light in the non-visible section from the environment of the vehicle. The light-blocking element preferably comprises a foil (also referred to as a film) or a sheet. If the light-blocking element comprises a foil, said foil is preferably attached to the non-visible section of the light-emitting element and/or a section of the fixation element holding the non-visible section (or a part thereof) of the light-emitting element. The foil is preferably attached with an adhesive.

If the light-blocking element comprises a sheet, said sheet is preferably connected with the non-visible section of the light-emitting element and/or with a section of the fixation element holding the non-visible section (or a part thereof) of the light-emitting element. For example, the sheet can be connected with a clip, a clamp, a bracket, a hook, an adhesive, a screw, a bolt, a strap, a band, a magnet or a combination thereof. It is readily evident for a person skilled in the art that any other connecting means can be used in addition or as an alternative to those mentioned before. In the present disclosure, the term "sheet" intends to refer to a light-blocking element with a greater thickness than a foil or film, and thus a greater stiffness, such that it does not necessarily need to abut the non-visible section of the light-emitting element and/or the section of the fixation element holding the non-visible section (or a part thereof), and/or be adhered to the same. Alternatively, it is preferred that the fixation element comprises the light-blocking element. The fixation element is then preferably configured to block light emitted from the light-emitting element in the non-visible section. This can be realized e.g. by providing a fixation element comprising a cover in its section receiving the non-visible section of the light-emitting element. Accordingly, the non-visible section, and preferably also the deformable element, can be covered with the cover. The fixation element preferably comprises connection means configured to mount the light-blocking element thereon. The connection means preferably comprise a deepening and/or a hole configured to receive a counterpart of the light-emitting element. This allows for a tight, light-proof connection.

Preferably, the deformable element is arranged between the light-emitting element and a part of a surface of the vehicle which is intended to be illuminated. This allows for the deformable element to be effectively and rapidly deformed at least partially when the light-emitting element is subjected to an external force. The surface of the vehicle is preferably an external surface of the vehicle (i.e. a surface visible at least from the external environment of the vehicle to other road users). As such, the inventive light guiding system can effectively be employed to prevent damage of the light-emitting element in the event of a collision of the vehicle with an obstacle, such as another vehicle.

It is preferred that the deformable element is a compressible element. That is, the deformable element is preferably configured to be compressible when the light guiding system, particularly the light-emitting element, is subjected to an external force, particularly to a compression force. As such, the light guiding system can be arranged in a space-saving manner. It is preferred that the deformable element is a spring, a foam or a combination thereof. A foam is understood to comprise an open- and/or closed-cell foam material, also referred to as a flexible foam, soft foam or sponge, which can be compressed when subjected to a compression force owing to its cavities (also referred to as pores), and which is capable of expanding back to its original shape at least partially, preferably completely, upon removal of the compression force. It is preferred that the foam comprises polyurethane, polyethylene, polystyrene or a combination thereof.

Particularly preferably, the deformable element is a spring. The robustness of springs allows for a high durability. Furthermore, springs show a predictable performance due to their respective force-displacement behavior which ensures a consistent operation. At the same time, a high degree of customizability is obtainable since the spring can be specifically adapted to environmental conditions, e.g. to meet different force requirements or different mounting space requirements.

Preferably, the spring is a radial spring or an axial spring. A radial spring intends to refer to a spring which can be deformed (preferably compressed) in a direction transversal to its longitudinal axis, whilst an axial spring intends to refer to a spring which can be deformed (preferably compressed) along its longitudinal axis. Particularly preferably, the spring is a radial spring. A radial spring allows for the light-emitting element to be wound around a part of a perimeter of the radial spring. As such, sharp deflections of the light-emitting element, particularly in the region of contact and/or in a section of the light-emitting element adjoining the region of contact, can be avoided which could otherwise increase the risk of failure of the light-emitting element in the event of the occurrence of an external force.

It is preferred that the spring is a compression spring. This allows for the spring to be compressed when the light-emitting element is subjected to an external force. As such, a space-saving arrangement of the inventive light guiding system can be provided. Preferably, the compression spring is a coil spring (also referred to as helical spring, spiral spring), a roller spring, a leaf spring (also referred to as plate spring) or a wave spring. With these types of springs, a particularly effective and rapid compression is obtainable.

It is preferred that the spring has a linear spring characteristic line. As linear springs follow Hooke's Law (i.e. the restoring force exerted by the spring is directly proportional to the compression or stretching), this facilitates the prediction of the behavior of the spring under different loads.

Preferably, the spring comprises a polymer or a metal. As such, a good and reversible deformability can be obtained. The metal can for example be selected from aluminum and/or steel. Preferably, the spring comprises a polymer, more preferably, the spring is made of a polymer. Using a polymer allows for a reduction of the weight of the spring whilst providing a robust and stable spring characteristic. It is preferred that the polymer is a thermoplastic polymer. This allows for a good balance between elongation properties and strength of the spring.

It is preferred that a longitudinal axis of the spring is arranged perpendicular to a longitudinal axis of the light-emitting element at least in a part of the region of contact. With this arrangement of the spring relative to the light-emitting element, the external force subjected onto the light-emitting element can be effectively transmitted to the spring. If the spring is a radial spring, the longitudinal axis of the radial spring is preferably arranged perpendicular to the longitudinal axis of the light-emitting element (i.e., preferably, the light-emitting element is arranged in an xy-plane and the longitudinal axis of the radial spring is arranged in a z-plane, with the z-plane corresponding to the xy-plane). This arrangement allows for a part of the light-emitting element to be uniformly wound around a part of a perimeter of the radial spring. As such, sharp deflections of the light-emitting element which could otherwise increase the risk of its failure can be avoided. If the spring is an axial spring, the longitudinal axis of the axial spring is preferably arranged perpendicular to the longitudinal axis of the light-emitting element at least in a part of the region of contact. Preferably, the longitudinal axis of the axial spring and the longitudinal axis of the light-emitting element are arranged in the same xy-plane. This allows for a particularly efficient transmission of the external force subjected onto the light-emitting element to the axial spring.

Preferably, the deformable element, particularly the spring, comprises a wheel abutting a part of the light emitting element and/or a part of the fixation element (particularly a part of a carrier element of the fixation element). With the wheel, the deformable element can be moved relative to the light-emitting element. This allows for a higher degree of freedom when the light guiding system, particularly the light-emitting element, is subjected to an external force, particularly in the event of a collision of a vehicle with an obstacle.

The light-emitting element is configured to emit light, preferably in a direction transversal to its longitudinal axis. If the light-emitting element comprises a non-visible section and a visible section, the light-emitting element is preferably configured to emit light in at least a part of the visible section. The light-emitting element is elongated such that an elongated illumination design, e.g. a light strip, can be generated. In the present disclosure, the term "light" is understood to refer to electromagnetic radiation in a wavelength range visible to the human eye.

The deformable element is configured to be deformed at least partially upon subjection of the light-emitting element to an external force. This intends to mean that the light-emitting element is configured to transmit said external force to the deformable element. It is preferred that the light-emitting element has a higher stiffness in a direction along its longitudinal axis than in a direction transversal to its longitudinal axis. This allows for a good transmission of the external force via the light-emitting element to the deformable element whilst enabling a certain flexibility of the light-emitting element in a direction transversal to its longitudinal axis, which reduces the risk of its breakage when subjected to the external force, particularly in the event of an impact.

Preferably, the light-emitting element comprises an optical fiber. The optical fiber is preferably configured to transmit light from a light source to a predetermined position of the light-emitting element (preferably to a predetermined position of the visible section) configured to emit light from the light-emitting element. It is preferred that the optical fiber comprises a glass fiber and/or a polymethyl methacrylate (PMMA). These materials allow for a particularly homogeneous and efficient transmission of light.

Preferably, the optical fiber comprises 100 to 300 glass fibers, preferably 150 to 250, particularly preferably 180 to 220. This yields a good balance between efficiency of transmission of light, brightness and stiffness of the optical fiber.

It is preferred that a diameter of the optical fiber is from 0.5 to 10.0 mm, more preferably from 1.0 to 8.0 mm, yet more preferably from 2.0 to 6.0 mm, particularly preferably from 3.0 to 5.0 mm. For example, a light-emitting element comprising a PMMA preferably has a diameter of from 4.5 to 5.5 mm; a light-emitting element comprising a glass fiber (preferably, 100 to 300 glass fibers) preferably has a diameter of from 3.0 to 3.5 mm.

It is preferred that the light-emitting element comprises an elongated printed circuit board (PCB). The light-emitting element comprising the elongated PCB is preferably used as an alternative to the light-emitting element comprising the optical fiber. Using an elongated PCB allows for a light source to be mounted thereon. As such, the elongated PCB preferably comprises a light source. This allows for a good structural support, stability, reliability and electrical connectivity owing to the PCB, as well as a good design flexibility (particularly regarding the position of the light source onto the PCB which can be flexibly chosen). The light source can comprise a light-emitting diode (LED), an incandescent lamp, a halogen lamp, a neon lamp, a laser diode, a fluorescent lamp, a plasma lamp or a combination thereof, and/or any other light source known in the art. Preferably, the light source comprises an LED. This allows for a long service life and a reduction of heat generation, as well as for electricity savings. Preferably, the elongated PCB comprises two or more light sources. Particularly preferably, the elongated PCB comprises several light sources arranged one after the other along the length of the elongated PCB, preferably at regular intervals. The use of several light sources allows to generate a desired illumination pattern, such as a light strip. If the light-emitting element comprises a non-visible section and a visible section, the light source(s) is I are preferably arranged in the visible section.

Preferably, the light-emitting element comprises an LED strip. The light-emitting element comprising the LED strip is preferably used as an alternative to the light-emitting element comprising the optical fiber. The LED strip preferably comprises several LEDs arranged one after the other, wherein the LEDs are preferably arranged at regular intervals. The LED strip preferably comprises two or more LEDs arranged one after the other, more preferably 10 or more, particularly preferably 20 or more. Using an LED strip allows to generate a desired illumination pattern, such as a light strip. If the light-emitting element comprises a non-visible section and a visible section, the LED strip is preferably arranged in the visible section.

Preferably, the light-emitting element comprises the elongated PCB, wherein the elongated PCB comprises the LED strip. As such, the PCB provides a stable platform securing the LEDs in place which ensures a consistent alignment and a reliable electrical connection.

Preferably, the light-emitting element is coated. This allows to tailor certain surface properties of the light-emitting element, particularly friction properties and/or optical properties. Preferably, the coating comprises a friction-reducing coating. As such, the friction between the light-emitting element and the fixation element can be reduced which allows for a quicker movement of the light-emitting element relative to the fixation element such to adapt to the external force, particularly by moving in a direction of action of the external force. In addition or alternatively thereto, the coating preferably comprises a light-scattering coating. As such, the light passing through the coating can be scattered in different directions. This allows to tailor the optical properties of the emitted light, e.g. to create a uniform light distribution such to eliminate harsh shadows.

Preferably, the coating of the light-emitting element comprises a thermoplastic polyolefin elastomer (POE) and/or an elastomer, wherein the elastomer preferably comprises a silicone elastomer. Such a coating provides for a high toughness and thus a high impact resistance. Furthermore, said coating allows to tailor the friction properties of the light-emitting element.

Preferably, if the light-emitting element comprises an optical fiber, the optical fiber comprises 100 to 300 single glass fibers and is coated with a coating comprising the POE and/or the elastomer, preferably the POE. This yields not only a high toughness but also can contribute to a reduced friction. It is preferred that not every single glass fiber is individually coated with the POE and/or the elastomer. That is, preferably, a core of the optical fiber comprises the single glass fibers and a mantle of the optical fiber comprises the coating.

Alternatively, if the light-emitting element comprises an elongated PCB and/or an LED strip, preferably, the elongated PCB (including any light source(s) mounted thereon) and/or the LED strip is/are coated with a coating comprising a silicone elastomer. The silicone elastomer can act as a scattering coating, particularly as a diffusor. As such, a uniform light distribution can be generated. The coating can be applied e.g. by means of injection molding (i.e. via overmolding).

The light-emitting element is preferably bent in at least a part of the region of contact and/or in a part of the light-emitting element adjacent to the region of contact. On the one hand, this can allow for an increase of the region of contact which can facilitate the transmission of the external force subjected onto the light-emitting element to the deformable element. On the other hand, this arrangement can allow for a particularly rapid deformation of the deformable element in the event of the occurrence of an external force. Preferably, the light-emitting element is bent over the whole region of contact. This allows for a particular good force transmission and deformability of the deformable element.

A minimum bending radius of the light-emitting element preferably ranges from 5 to 150 mm. The minimum bending radius is intended to refer to the smallest possible bending radius of the light-emitting element without causing any breakage of the same. Providing a light-emitting element with a minimum bending radius in said range ensures that the light-emitting element can be bent in at least a part of the region of contact without any damage of the light-emitting element. If the light-emitting element comprises an optical fiber, the minimum bending radius of the light-emitting element preferably ranges from 5 to 30 mm, more preferably from 10 to 27 mm. If the optical fiber comprises a glass fiber (preferably, 100 to 300 glass fibers), the minimum bending radius of the light-emitting element preferably ranges from 8 to 17 mm, more preferably from 10 to 15 mm. If the optical fiber comprises a PMMA, the minimum bending radius of the light-emitting element preferably ranges from 20 to 30 mm, more preferably from 23 to 27 mm. If the light-emitting element comprises an elongated PCB, the minimum bending radius of the light-emitting element preferably ranges from 50 to 150 mm, more preferably from 80 to 120 mm, yet more preferably from 90 to 110 mm. If the light-emitting element comprises an LED strip, the minimum bending radius of the light-emitting element preferably ranges from 50 to 150 mm, more preferably from 80 to 120 mm, yet more preferably from 90 to 110 mm.

The fixation element holds the light-emitting element and the deformable element, and it is preferably configured to connect the light-emitting element and the deformable element with the vehicle. For this purpose, the fixation element can comprise a clip, a clamp, a bracket, a hook, an adhesive, a screw, a bolt, a strap, a band, a magnet or a combination thereof. It becomes readily evident for a person skilled in the art that other means of fixation elements can be used likewise in addition or as an alternative to those mentioned before, provided that they are capable of connecting the light-emitting element and the deformable element with the vehicle.

The fixation element preferably comprises two or more fixation components. Preferably, the fixation element comprises a first fixation component holding the light-emitting element and a second fixation component holding the deformable element. That is, the first and second fixation components are preferably separate from one another, i.e. separate components. This allows for a higher freedom of design. Preferably, the first fixation component comprises several single parts uniformly distributed along a length of the light-emitting element, preferably two to twelve single parts, more preferably four to ten single parts, yet more preferably six to eight single parts. Each single part preferably comprises a clip, a clamp, a bracket, a hook, an adhesive, a screw, a bolt, a strap, a band, a magnet or a combination thereof. As such, the first fixation component is capable of uniformly holding the light-emitting element along its entire length.

Preferably, the fixation element is coated. This allows to tailor certain surface properties of the fixation element, particularly friction properties and/or optical properties. Preferably, the coating comprises a friction-reducing coating. As such, the friction between the light-emitting element and the fixation element can be reduced which allows for a quicker movement of the light-emitting element relative to the fixation element such to adapt to the external force, particularly by moving in a direction of action of the external force.

Preferably, the stiffness of the fixation element is smaller than or equal to the stiffness of the light-emitting element, preferably smaller. In the present disclosure, the stiffness is intended to signify a measure of the resistance offered by a body (i.e., the fixation element, the light-emitting element) to deformation. Preferably, the stiffness of the light-emitting element intends to refer to the stiffness of the light-emitting element in a direction transversal to its longitudinal axis. The fixation element having a stiffness smaller than or equal to the stiffness of the light-emitting element signifies that the fixation element has a higher deformability and/or ductility than the light-emitting element. This ensures that upon subjection of the light-emitting element to an external force, which external force does not lead to an irreversible deformation or breakage of the light guiding element, the fixation element remains intact, i.e. it is not damaged (e.g. broken). If the fixation element would have a higher stiffness than the light-emitting element, subjecting the light-emitting element to the external force may lead to a damage of the fixation element, with the light-emitting element remaining intact; this would then result in the need of repair or replacement of the fixation element or even of the whole light guiding system (which avoidance is aimed at by the present invention).

It is particularly preferred that the fixation element consists of a polymeric material (including a combination of two or more polymers). This facilitates its manufacture. The fixation element is preferably a two-component fixation element. Preferably, the two-component fixation element comprises a hard component and a soft component. The soft component can provide sufficient elongation at break and deformability whilst the hard component can serve to increase the stiffness and strength.

Preferably, the fixation element is a two-component fixation element comprising a thermoplastic elastomer (TPE) and a thermoplastic polymer. This material combination is particularly suitable for the present application since it can withstand impact forces well. The thermoplastic polymer preferably comprises polycarbonate (PC) and/or poly(methyl methacrylate) (PMMA), and/or the TPE preferably comprises a thermoplastic vulcanizate (TPV).

The fixation element preferably comprises a carrier element. The carrier element preferably extends along the entire length of the light-emitting element. A good holding of the light-emitting element can then be provided. The carrier element preferably holds both the light-emitting element and the deformable element (i.e. in this case, the fixation element preferably does not comprise two or more fixation components separate from one another). This facilitates the manufacture and handling of the inventive light guiding system. It is preferred that at least a part of the light-emitting element, preferably the entire light-emitting element and particularly preferably also the deformable element, are received in the carrier element, preferably in a longitudinal opening of the carrier element. This allows for a particularly good holding of the light-emitting element (and preferably the deformable element), preferably along the entire length of the light-emitting element. Alternatively, it is preferred that the fixation element comprises a first fixation component and a second fixation component, wherein the first and second fixation components are separate from each other, wherein the first fixation component comprises a carrier element holding the light-emitting element, and wherein the second fixation component holds the deformable element. This allows for a higher degree of freedom in terms of selection of the type of deformable element, as well as in terms of the relative arrangement of the light-emitting element to the deformable element.

The carrier element is preferably U-shaped at least over a part of its length. Preferably, an inner diameter of the longitudinal opening formed by the U-shaped part of the carrier element is matched to the dimensions of the light-emitting element, particularly to a cross-section area of the light-emitting element. As such, preferably, the light-emitting element abuts an inner side of the U-shaped part of the carrier element. This allows for a stable arrangement of the light-emitting element in the carrier element. As such, the risk of any undesired movements of the light-emitting element relative to the vehicle, e.g. when driving along an uneven road, can be reduced. The carrier element is preferably arranged such that a gap (also referred to as a slot) of the longitudinal opening of the U-shaped part faces the environment of the vehicle. This allows for light emitted from the light-emitting element to pass through the gap and to reach the surface of the vehicle which needs to be illuminated in an unhindered way. Preferably, the carrier element is U-shaped at least over a part of its length receiving the visible section of the light-emitting element (if present), particularly preferably the carrier element is U-shaped over its whole length receiving the visible section.

The U-shaped part of the carrier element preferably comprises an undercut. The undercut (also referred to as a retaining lug) is preferably arranged in close proximity to the gap of the longitudinal opening of the U-shaped part. In other words, the undercut is preferably designed such that the resulting width of the gap of the longitudinal opening is smaller than a diameter (or width) of a cross-section area of the light-emitting element. As such, when the light-emitting element is received in the longitudinal opening, it is additionally fixed via form locking between the light-emitting element and the undercut.

The carrier element is preferably injection-molded or extruded, particularly preferably injection-molded. Injection-molding is preferred because it allows for a non-uniform cross-section area to be formed along the length of the carrier element. As such, the deformable element can be received in the carrier element, particularly in a longitudinal opening of the carrier element, together with the light-emitting element. Preferably, the cross-section area of the carrier element then is comparatively large-sized in a section of the carrier element configured to receive both the light-emitting element and the deformable element, whereas the cross-section area of the carrier element is preferably comparatively small-sized in its remaining sections configured to receive only the light-emitting element (i.e., and not the deformable element).

The light guiding system preferably further comprises a translucent cover plate connected with the light-emitting element. In the present disclosure, the translucent cover plate signifies a plate through which at least a part of the visible range of light can pass. The translucent cover plate can be colorless or colored. The color of the emitted light can thus be tailored by selecting a translucent cover plate with a specific color, or a colorless translucent cover plate. The translucent cover plate preferably comprises PMMA and/or PC. A first side of the translucent cover plate preferably forms at least a part of a surface of the vehicle (which surface is intended to be illuminated at least partially), whereas a part of a second side of the translucent cover plate which is opposed to its first side preferably faces at least a part of the visible section of the light-emitting element. Preferably, the fixation element is arranged between the translucent cover plate and the light-emitting element (particularly if the fixation element comprises a carrier element). The fixation element then preferably comprises a gap arranged between the light-emitting element and the translucent cover plate. This allows for light emitted from the light-emitting element to pass through the gap and subsequently through the translucent cover plate in an unhindered way.

Preferably, the light-emitting element comprises two or more non-visible sections, more preferably two or three non-visible sections, yet more preferably two non-visible sections. When the light-emitting element comprises two non-visible sections, it is preferred that the visible section is arranged between a first non-visible section and a second non-visible section. If the surface of the vehicle to be illuminated is located in a front or rear part of the vehicle, the non-visible sections are preferably positioned in regions of the vehicle wherein the front part or rear part is adjacent to a side part of the vehicle. The side part of the vehicle intends to refer to a side of the vehicle accommodating a side door.

When the light-emitting element comprises three non-visible sections, it is preferred that the light-emitting element further comprises two visible sections, and that the visible sections and the non-visible sections are arranged alternately. Preferably, two of the non-visible sections are arranged at respective end sections of the light-emitting element. If the surface of the vehicle to be illuminated is located in a front or rear part of the vehicle, said two non-visible sections are preferably positioned in regions of the vehicle wherein the front part or rear part is adjacent to a side part of the vehicle, and a third of the non-visible sections is positioned in the front or rear part of the vehicle. Such an arrangement allows for an interruption of the part of the surface of the vehicle which is intended to be illuminated, which in turn enables a higher freedom of design. For example, in the non-visible section positioned in the front or rear part of the vehicle, an emblem, such as a radiator emblem, can be mounted.

The light guiding system preferably comprises two or more deformable elements, more preferably two, three or four deformable elements, yet more preferably two deformable elements. When the light guiding system comprises two deformable elements, the light guiding system preferably also comprises two non-visible sections, i.e. a first non-visible section and a second non-visible section. Preferably, a first deformable element then abuts at least a part of the first non-visible section and a second deformable element abuts at least a part of the second non-visible section, and/or preferably, the first deformable element abuts at least a part of a section of the fixation element holding the first non-visible section and the second deformable element abuts at least a part of a section of the fixation element holding the second non-visible section. This arrangement allows for a better and quicker reaction to an external force. When the light guiding system comprises two non-visible sections, the fixation element preferably comprises two covers. As such, each non-visible section can be arranged in a section of the fixation element comprising a cover, such that light emitted in both non-visible sections can be blocked by means of the respective covers.

Preferably, the light guiding system is configured to illuminate at least a part of an exterior of the vehicle and/or at least a part of an interior of the vehicle. The "exterior" is understood to comprise at least a part of an outer surface of the vehicle. The interior is understood to comprise at least a part of a surface arranged in a passenger compartment or in a trunk of the vehicle, preferably in a passenger compartment. Preferably, the light guiding system is configured to illuminate at least a part of a radiator grill, a bumper, a rear and/or a side part of the vehicle. The side part is preferably a side door, such as a front door and/or a back door.

The present invention further relates to a system comprising the inventive light guiding system and a vehicle component connected with the light guiding system, preferably wherein the vehicle component comprises a radiator grill, a bumper, a rear and/or a side part of the vehicle. Preferably, the light guiding system is arranged in or attached to the vehicle component. This can facilitate the installation of the light guiding system. The side part of the vehicle is preferably a side door, such as a front door and/or a back door.

Preferably, the system further comprises a holder configured to fixate an end of the light-emitting element. The holder preferably comprises a clamping element configured to receive an end of the light-emitting element. This allows for a stable fixation of the light-emitting element in the system. It is preferred that the holder is securely mounted in the vehicle component. As such, any movements of the holder relative to the vehicle component can be avoided. Preferably, the system comprises a first holder configured to fixate a first end of the light-emitting element and a second holder configured to fixate a second end of the light-emitting element. As such, the light-emitting element can be firmly fixed at both of its ends.

Preferably, if the light-emitting element comprises an optical fiber, the system further comprises a light source configured to introduce light into the optical fiber (i.e., to couple light into the optical fiber). Preferably, a first end of the light-emitting element is connected with the light source. Particularly preferably, the first end of the light-emitting element is securely fixed relative to the light source, e.g. via clamping. As such, any undesired movement of the first end of the light-emitting element relative to the light source can be avoided. The light source can comprise a light-emitting diode (LED), an incandescent lamp, a halogen lamp, a neon lamp, a laser diode, a fluorescent lamp, a plasma lamp or a combination thereof, and/or any other light source known in the art. Preferably, the light sources comprises an LED. The use of LEDs allows for a long service life and a reduction of heat generation, as well as for electricity savings. The system preferably comprises a holder configured to hold the light source. This allows for a stable fixation of the light source, particularly relative to the light-emitting element. Said holder is preferably the same holder configured to fixate an end of the light-emitting element. That is, the system preferably comprises a holder configured to fixate an end of the light-emitting element and configured to hold the light source. As such, a defined distance between the light source and the end of the light-emitting element fixated by the holder can be maintained. This allows to ensure a tight connection between the light source and the light-emitting element and thus a homogeneous coupling of light from the light source into the light-emitting element. The light source is preferably arranged in the vehicle component connected with the light guiding system. As such, the light source is preferably incorporated in or attached to the vehicle component. Alternatively, the light source is preferably arranged in another, neighboring vehicle component. For example, the light guiding system can be arranged in the radiator grill whilst the light source can be arranged in a side part of the vehicle.

Preferably, the system further comprises a PCB, wherein the light source is preferably mounted on a side of the PCB facing the optical fiber. Using a PCB allows for a good structural support, stability, reliability and electrical connectivity. The system then preferably also comprises a holder configured to fixate an end of the optical fiber (into which light is introduced from the light source), wherein the holder is also configured to hold the PCB. This allows for a stable fixation of the light source mounted onto the PCB and of the end of the light-emitting element, such that any relative movement between the light source and the end of the light-emitting element is avoided. Preferably, the holder comprises a snap-in element configured to fixate the PCB and/or a centering hole configured to align the PCB with the holder. This can further improve the fixation of the PCB in the holder.

Preferably, if the light-emitting element comprises an optical fiber, the system comprises a first light source and a second light source, wherein the first light source is configured to introduce light into a first end of the optical fiber and the second light source is configured to introduce light into a second end of the optical fiber. The introduction of light into the optical fiber at both of its ends can improve the uniformity and/or brightness of the generated illumination. It is preferred that the system then comprises a first holder configured to fixate the first end of the optical fiber and a second holder configured to fixate the second end of the optical fiber, wherein the first holder is preferably further configured to hold the first light source and the second holder is preferably further configured to hold the second light source. It is also preferred that the system then comprises a first PCB and a second PCB, wherein the first light source is mounted on a side of the first PCB facing the optical fiber and the second light source is mounted on a side of the second PCB facing the optical fiber. The first holder is then preferably configured to fixate the first end of the optical fiber and to hold the first PCB, and the second holder is preferably configured to fixate the second end of the optical fiber and to hold the second PCB.

The present invention further relates to a vehicle, particularly motor vehicle, comprising the inventive light guiding system or the inventive system. The vehicle can be any motor vehicle or non-motorized vehicle, such as a car, a truck, a motorcycle, a moped, a trailer, a tractor or a bike. Preferably, the vehicle is a motor vehicle, particularly preferably a car or a truck.

The present invention particularly relates to the following embodiments:
1. Light guiding system for a vehicle, in particular a motor vehicle, comprising
   an elongated light-emitting element configured to emit light,
   an elastically deformable element, and
   a fixation element,
   wherein the elastically deformable element abuts a part of the light-emitting element and/or a part of the fixation element,
   wherein the fixation element holds the light-emitting element and the deformable element,
   wherein the deformable element is configured to subject the light-emitting element to a first tension force when the deformable element is in a first state and has a first restoring force,
   wherein the deformable element is further configured to subject the light-emitting element to a second tension force when the deformable element is in a second state and has a second restoring force,
   wherein the second restoring force is higher than the first restoring force, and
   wherein the second tension force is lower than the first tension force.
2. Light guiding system according to embodiment 1, wherein the light-emitting element comprises a non-visible section and a visible section, and wherein the deformable element abuts a part of the non-visible section of the light-emitting element and/or wherein the deformable element abuts a part of the section of the fixation element holding the non-visible section of the light-emitting element.
3. Light guiding system according to embodiment 1 or 2, wherein the deformable element is a compressible element.
4. Light guiding system according to any of embodiments 1 to 3, wherein the deformable element is a spring, a foam or a combination thereof, preferably a spring, preferably wherein the spring is a radial spring or an axial spring, preferably a radial spring.
5. Light guiding system according to embodiment 4, wherein the spring is a compression spring, wherein the compression spring is preferably a coil spring, a roller spring, a leaf spring or a wave spring.
6. Light guiding system according to embodiment 4 or 5, wherein the spring has a linear spring characteristic line, and/or wherein the spring comprises a polymer or a metal, preferably a polymer.
7. Light guiding system according to any of embodiments 1 to 6, wherein the second tension force is 20% of the first tension force or below, preferably 10% of the first tension force or below, more preferably 5% of the first tension force or below, particularly preferably zero.
8. Light guiding system according to any of embodiments 4 to 7, wherein a longitudinal axis of the spring is arranged perpendicular to a longitudinal axis of the light-emitting element at least in a part of a region of contact formed between the spring and the light-emitting element and/or between the spring and the fixation element.
9. Light guiding system according to any of embodiments 1 to 8, wherein the light-emitting element comprises an optical fiber, preferably wherein the optical fiber comprises a glass fiber and/or a polymethyl methacrylate (PMMA).
10. Light guiding system according to embodiment 9, wherein the optical fiber comprises 100 to 300 glass fibers, preferably 150 to 250, particularly preferably 180 to 220.
11. Light guiding system according to embodiment 9 or 10, wherein a diameter of the optical fiber is from 0.5 to 10.0 mm, more preferably from 1.0 to 8.0 mm, yet more preferably from 2.0 to 6.0 mm, particularly preferably from 3.0 to 5.0 mm.
12. Light guiding system according to any of embodiments 1 to 8, wherein the light-emitting element comprises an elongated printed circuit board (PCB).
13. Light guiding system according to any of embodiments 1 to 8 or 12, wherein the light-emitting element comprises a light-emitting diode (LED) strip.
14. Light guiding system according to any of embodiments 1 to 13, wherein the light-emitting element is coated.
15. Light guiding system according to embodiment 14, wherein the coating of the light-emitting element comprises a thermoplastic polyolefin elastomer (POE) and/or an elastomer, wherein the elastomer preferably comprises a silicone elastomer.
16. Light guiding system according to any of embodiments 1 to 15, wherein the light-emitting element is bent in at least a part of the region of contact formed between the deformable element and the light-emitting element and/or between the deformable element and the fixation element.
17. Light guiding system according to embodiment 16, wherein a minimum bending radius of the light-emitting element ranges from 5 to 150 mm.
18. Light guiding system according to any of embodiments 1 to 17, wherein the fixation element is coated.
19. Light guiding system according to any of embodiments 1 to 18, wherein the fixation element comprises a polymeric material, preferably wherein the fixation element is a two-component fixation element, wherein the two-component fixation element preferably comprises a hard component and a soft component.
20. Light guiding system according to embodiment 19, wherein the fixation element is a two-component fixation element comprising a thermoplastic elastomer (TPE) and a thermoplastic polymer, preferably wherein the thermoplastic polymer comprises polycarbonate (PC) and/or poly(methyl methacrylate) (PMMA), and/or preferably wherein the TPE comprises a thermoplastic vulcanizate (TPV).
21. Light guiding system according to any of embodiments 1 to 20, wherein the fixation element comprises a carrier element, preferably wherein at least a part of the light-emitting element, and preferably also the deformable element, are received in the carrier element, preferably in a longitudinal opening of the carrier element.
22. Light guiding system according to embodiment 21, wherein the carrier element is U-shaped at least over a part of its length.
23. Light guiding system according to embodiment 22, wherein the U-shaped part of the carrier element comprises an undercut.
24. Light guiding system according to any of embodiments 21 to 23, wherein the carrier element is injection-molded or extruded, preferably injection-molded.
25. Light guiding system according to any of embodiments 1 to 24, further comprising a translucent cover plate connected with the light-emitting element.
26. Light guiding system according to any of embodiments 1 to 25, further comprising a light-blocking element, wherein the light-blocking element is attached to a part of the fixation element and/or to a part of the light-emitting element, and/or wherein the fixation element comprises the light-blocking element.
27. Light guiding system according to any of embodiments 2 to 26, wherein the light-emitting element comprises two or more non-visible sections, preferably two or three non-visible sections, more preferably two non-visible sections.
28. Light guiding system according to any of embodiments 1 to 27, comprising two or more deformable elements, preferably two, three or four deformable elements, particularly preferably two deformable elements.
29. Light guiding system according to any of embodiments 1 to 28, wherein the light guiding system is configured to illuminate at least a part of an exterior of the vehicle and/or at least a part of an interior of the vehicle.
30. System comprising
   a light guiding system according to any of embodiments 1 to 29, and
   a vehicle component connected with the light guiding system,
   preferably wherein the vehicle component comprises a radiator grill, a bumper, a rear and/or a side part of the vehicle.
31. System according to embodiment 30, further comprising a holder fixating an end of the light-emitting element, wherein the system preferably comprises a first holder fixating a first end of the light-emitting element and a second holder fixating a second end of the light-emitting element.
32. System according to embodiment 30 or 31, wherein the light-emitting element comprises an optical fiber, and wherein the system further comprises a light source configured to introduce light into the optical fiber.
33. System according to embodiment 32, wherein the system further comprises a PCB, and wherein the light source is mounted on a side of the PCB facing the optical fiber.
34. System according to embodiment 32 or 33, comprising a first light source and a second light source, wherein the first light source is configured to introduce light into a first end of the optical fiber, and the second light source is configured to introduce light into a second end of the optical fiber.
35. Vehicle, particularly motor vehicle, comprising a light guiding system according to any of embodiments 1 to 29 or a system according to any of embodiments 30 to 34.

The following figures are supposed to further illustrate the present invention. The described embodiments are particularly preferred embodiments to which the invention is not limited.
Fig. 1 shows a schematic embodiment of a light guiding system.
Fig. 2 shows a further schematic embodiment of a light guiding system.
Fig. 3 is a schematic embodiment of a system comprising the light guiding system of Fig. 1.
Fig. 4 is a schematic embodiment of a system comprising the light guiding system of Fig. 2.
Fig. 5 shows a schematic view of a part of the system of Fig. 3.
Fig. 6 shows a schematic view of a part of the system of Fig. 4.
Fig. 7 shows a schematic view of the system of Fig. 3.
Fig. 8a and Fig. 8b show schematic views of a part of the system of Fig. 3.
Fig. 9a-c show schematic views of parts of light guiding systems.

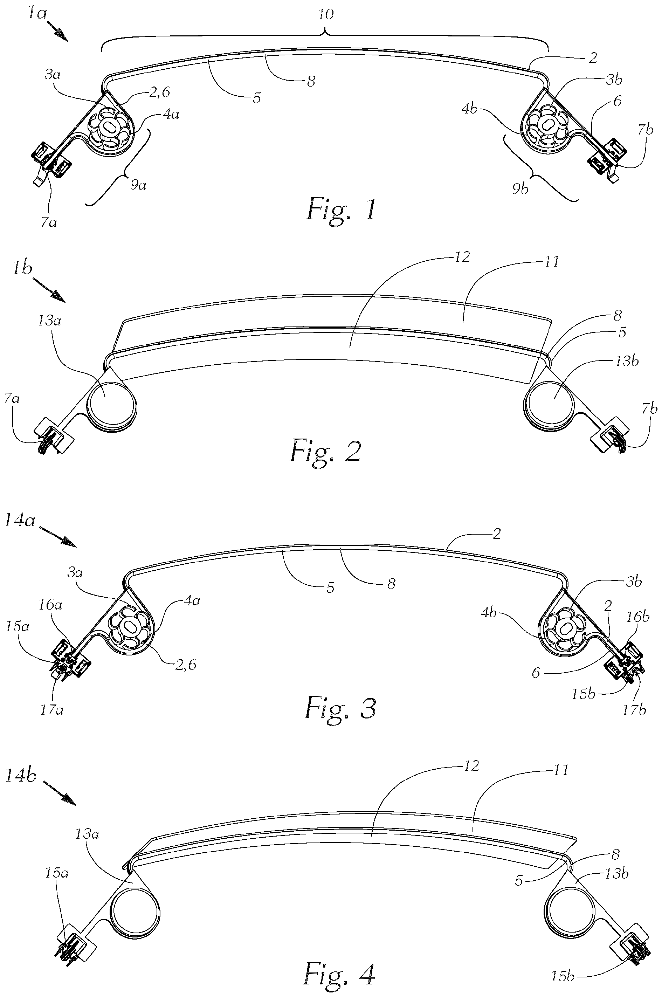

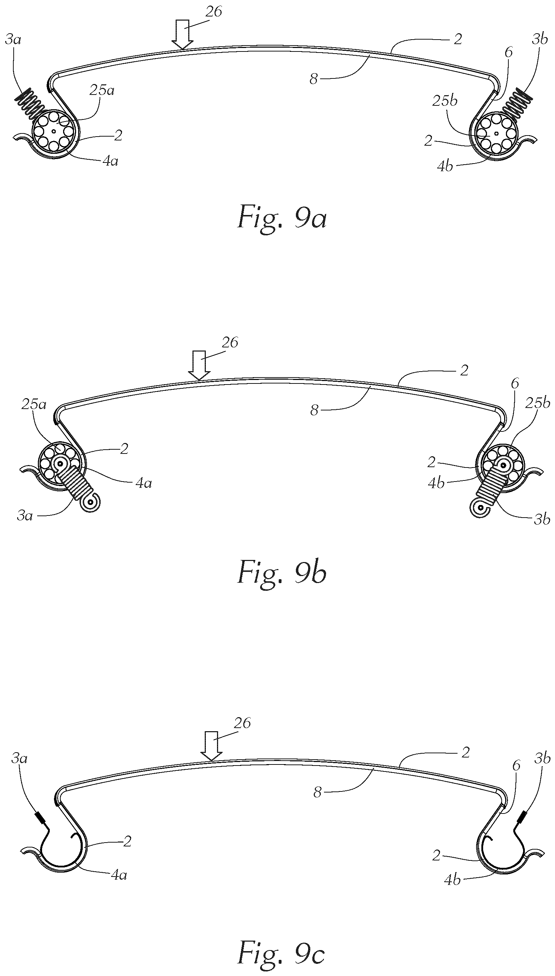

Fig. 1 shows a schematic embodiment of a light guiding system 1a for a vehicle, in particular a motor vehicle. The light guiding system 1a comprises an elongated light-emitting element 2 configured to emit light, preferably in a direction essentially transversal to its longitudinal axis, two deformable elements 3a-b abutting a part of the light-emitting element 2 to form a region of contact 4a-b between the respective deformable element 3a-b and the light-emitting element 2, and a fixation element 5 holding the light-emitting element 2 and the deformable elements 3a-b. The deformable elements 3a-b are radial springs. Respective longitudinal axes of the deformable elements 3a-b are arranged perpendicular to a longitudinal axis of the light-emitting element 2; as the longitudinal axis of the light-emitting element 2 is arranged in an xy-plane in Fig. 1, the longitudinal axes of the radial springs are thus arranged in a z-plane. This arrangement allows for parts of the light-emitting element 2 abutting the deformable elements 3a-b in the region of contact 4a-b to be uniformly wound around a perimeter of the respective deformable element 3a-b. As such, sharp deflections of the light-emitting element 2 in the region of contact 4a-b are avoided. The deformable elements 3a-b, i.e. the radial springs, are compressible in a direction transversal to their longitudinal axes. The compressibility of the deformable elements 3a-b allows for a space-saving arrangement of the components of the light guiding system 1a. Furthermore, the light-emitting element 2 being bent in at least a part of the region of contact 4a-b increases said region of contact 4a-b which facilitates the transmission of an external force 26 (see Fig. 9a-c) subjected onto the light-emitting element 2 to the deformable elements 3a-b.

As can further be seen from Fig. 1, the light-emitting element 2 comprises an optical fiber 6 which is configured to transmit light introduced into a first end 7a and/or a second end 7b of the optical fiber 6 to a predetermined position of the optical fiber 6. The optical fiber 6 comprises 200 single glass fibers which yields a good balance between efficiency of transmission of light, brightness and stiffness of the optical fiber 6. The optical fiber 6 is coated with a coating comprising a thermoplastic polyolefin elastomer (POE). Accordingly, a core of the optical fiber 6 comprises the single glass fibers and a mantle of the optical fiber 6 comprises the coating. The coating provides for a high toughness and thus a high impact resistance, and furthermore lowers the friction which allows for a quicker movement of the light-emitting element 2 relative to the fixation element 5 such to adapt to the external force 26, particularly by moving in a direction of action of the external force 26. A diameter of the optical fiber 6 is preferably about 3.2 mm. A minimum bending radius of the light-emitting element 2 is preferably about 12 mm. This allows to bend the light-emitting element 2 in the region of contact 4a-b to be wound around a perimeter of the deformable elements 3a-b without any damage.

Fig. 1 further shows that the fixation element 5 comprises a carrier element 8 which extends along the entire length of the light-emitting element 2 and wherein both the light-emitting element 2 and the deformable elements 3a-b are received. As such, the carrier element 8 provides for a good holding of the light-emitting element 2 along its entire length and of the deformable elements 3a-b. The carrier element 8 is injection-molded since this type of manufacture allows to form a non-uniform cross-section area along its length. The fixation element 5 has a stiffness smaller than the stiffness of the light-emitting element 2 such that upon subjection of the light-emitting element 2 to an external force 26 (which external force does not lead to an irreversible deformation or breakage of the light-emitting element 2), the fixation element 5 is not damaged. The fixation element 5 is a two-component fixation element 5 comprising a thermoplastic vulcanizate (TPV) and a thermoplastic polymer, namely polycarbonate (PC) and/or poly(methyl methacrylate) (PMMA). This material combination is particularly suitable for the fixation element 5 as it can withstand impact forces well.

As further shown in Fig. 1, the light-emitting element 2 comprises two non-visible sections 9a-b and a visible section 10, and the deformable elements 3a-b abut the light-emitting element 2 in their non-visible sections 9a-b. The light-emitting element 2 is configured to emit light along the visible section 10, which light is visible in an environment of the vehicle (i.e. in an external and/or an internal environment of the vehicle). In the non-visible sections 9a-b, light emitted from the light-emitting element 2 is immediately blocked such that no light is visible in the environment of the vehicle. For this purpose, the fixation element 5 comprises two light-blocking elements 13a-b (see Fig. 2) in its sections which receive the non-visible sections 9a-b and the deformable elements 3a-b. The visible section 10 is arranged between the two non-visible sections 9a-b. This arrangement allows for the non-visible sections 9a-b to be positioned in regions of a vehicle wherein a front part or a rear part is adjacent to a side part (i.e. a side of the vehicle accommodating a side door) whereas the visible section 10 can be positioned in the front part or rear part of the vehicle.

The carrier element 8 is U-shaped over a part of its length such that a tight holding of the light-emitting element 2 is realized. Particularly, the carrier element 8 is U-shaped over its length receiving the visible section 10 and over parts of its length receiving the non-visible sections 9a-b. In parts of the carrier element 8 receiving both the deformable elements 3a-b and parts of the non-visible sections 9a-b, the carrier element 8 is not U-shaped but rather has a larger cross-section area such to hold of both the deformable elements 3a-b and the light-emitting element 2.

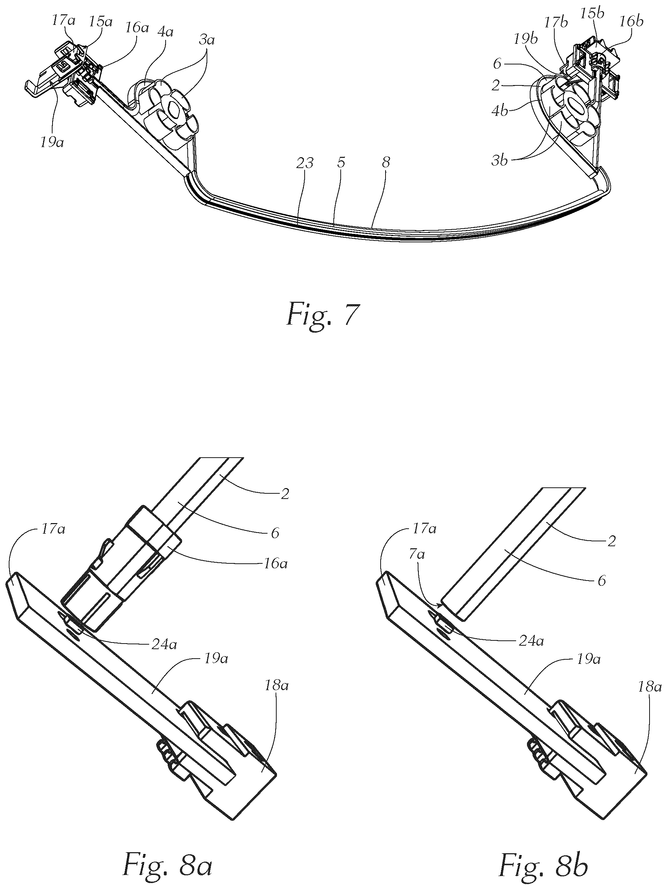

Fig. 2 shows a schematic embodiment of a light guiding system 1b comprising the components described in connection with the light guiding system 1a shown in Fig. 1 and further comprising a translucent cover plate 11 connected with the light-emitting element 2 (see Fig. 1). Said translucent cover plate 11 is a plate made of PMMA through which at least a part of the visible range of light can pass. A first side (not visible in Fig. 2) of the translucent cover plate 11 forms at least a part of a surface of the vehicle which is visible from an environment of the vehicle to a passenger of the vehicle and/or to another road user. A part of a first side 12 of the translucent cover plate 11 arranged opposed to the first side of the translucent cover plate 11 faces the visible section 10 (see Fig. 1) of the light-emitting element 2. The fixation element 5 is arranged between the translucent cover plate 11 and the light-emitting element 2. The fixation element 5 comprises a gap 23 (see Fig. 7) arranged between the light-emitting element 2 and the translucent cover plate 11. This allows for light emitted from the light-emitting element 2 to pass through the gap 23 and subsequently through the translucent cover plate 11.

Furthermore, as can be seen from Fig. 2, the fixation element 5 comprises light-blocking elements 13a-b in sections of the fixation element 5 receiving the non-visible sections 9a-b (see Fig. 1) of the light-emitting element 2. The light-blocking elements 13a-b are configured to block light emitted from the light-emitting element 2 in the non-visible sections 9a-b, and they are realized as covers which cover the non-visible sections 9a-b and the deformable elements 3a-b (see Fig. 1).

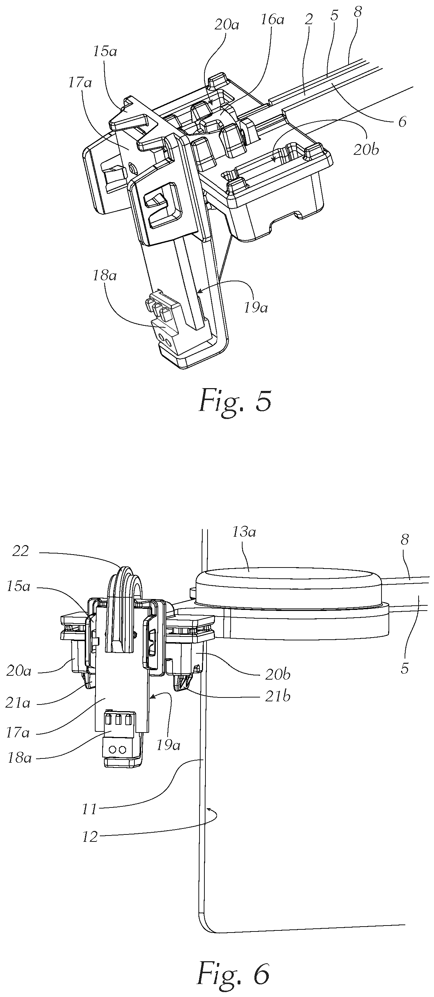

Fig. 3 is a schematic embodiment of a system 14a comprising the light guiding system 1a shown in Fig. 1. The light guiding system 1a is connected with a vehicle component (not shown). The system 14a further comprises a first holder 15a and a second holder 15b, each comprising a clamping element 16a-b which receive the first end 7a and the second end 7b (see Fig. 1) of the optical fiber 6, respectively. The system 14a further comprises two printed circuit boards (PCBs) 17a-b, each being held with one of holders 15a-b via snap-in elements and a centering hole. Each holder 15a-b also comprises an edge connector 18a-b (see Fig. 5 and Fig. 6) for electrical connection of PCBs 17a-b. On PCBs 17a-b, a first light source 24a (see Fig. 8a and 8b) and a second light source, namely light-emitting diodes (LEDs), are mounted on sides 19a-b (see Fig. 5 and Fig. 7) of the respective PCBs 17a-b facing the optical fiber 6. The light sources mounted onto the PCBs 17a-b are configured to introduce light into the optical fiber 6. The holders 15a-b do not only receive the first end 7a and the second end 7b of the optical fiber 6 (see Fig. 1) but also hold the PCBs 17a-b and thus the light sources mounted thereon. As such, any undesired movement of the first end 7a and the second end 7b of the optical fiber 6 relative to the light sources can be avoided.

Fig. 4 is a schematic embodiment of a system 14b comprising the light guiding system 1b shown in Fig. 2. The system 14b comprises the components described in connection with the system 1a shown in Fig. 3. Furthermore, the system 14b comprises the translucent cover plate 11 connected with the light-emitting element 2 (see Fig. 1), and the fixation element 5 further comprises the light-blocking elements 13a-b.

Fig. 5 shows a schematic view of a part of the system 14a of Fig. 3. As can be seen, the holder 15a comprises the clamping element 16a which receives the first end 7a (see Fig. 1) of the optical fiber 6, and the holder 15a further comprises the edge connector 18a. The fixation element 5 comprises connection means 20a-b configured to mount the light-blocking element 13a. Each of the connection means 20a-b comprises a deepening and holes and is configured to receive a respective counterpart 21a-b (see Fig. 6) of the light-blocking element 13a.

Fig. 6 shows a schematic view of a part of the system 14b displayed in Fig. 4. As can be seen, the fixation element 5 comprises the light-blocking element 13a which is mounted to the connection means 20a-b of the fixation element 5 via counterparts 21a-b. Additionally, the light-blocking element 13a is clamped to the PCB 17a via a clamp 22 such to allow for an improved fixation.

A schematic view of the system 14a of Fig. 3 is displayed in Fig. 7, wherein a gap 23 of the carrier element 8 is visible. Accordingly, the carrier element 8 is U-shaped over a part of its length which comprises the visible section 10 (see Fig. 1) of the light-emitting element 2. An inner diameter of a longitudinal opening formed by the U-shaped part of carrier element 8 is matched to a cross-section area of light-emitting element 2. As such, light-emitting element 2 abuts an inner side of carrier element 8. This allows for a stable arrangement of light-emitting element 2 in the carrier element 8. The gap 23 is arranged between the light-emitting element 2 and the translucent cover plate 11 (see Fig. 2). Light emitted from the light-emitting element 2 can pass through the gap 23 and subsequently through the translucent cover plate 11, such that a light strip visible in an environment of the vehicle to passengers of the vehicle and/or other road users can be generated.

Fig. 8a and Fig. 8b are schematic views of a part of the system 14a of Fig. 3. As can be seen, the first light source 24a, namely an LED, is mounted on the side 19a of PCB 17a facing the optical fiber 6. Due to the fixation of the first end 7a of the optical fiber 6 in the clamping element 16a (see Fig. 8a) of the holder 15a (see Fig. 5) and the fixation of the first light source 24a onto the side 19a of the PCB 17a, a defined distance between the first light source 24a and the first end 7a of the optical fiber 6 can be maintained. As such, a homogeneous coupling of light from the first light source 24a into the optical fiber 6 can be ensured. The relative arrangement of the second light source which is mounted on side 19b of PCB 17b (see Fig. 7) to the second end 7b of the optical fiber 6 is the same as shown in Fig. 8a and Fig. 8b for the first light source 24a.

Each of Fig. 9a-c shows a schematic view of parts of a light guiding system, namely a light-emitting element 2 and two deformable elements 3a-b. A first fixation component of a fixation element comprises a carrier element 8 holding the light-emitting element 2. A second fixation component (not shown) of the fixation element is arranged separately from the first fixation component and holds the deformable elements 3a-b. The deformable elements 3a-b abut parts of the carrier element 8 such to form regions of contact 4a-b. In Fig. 9a-b, the deformable elements 3a-b are coil springs and in Fig. 9c, the deformable elements 3a-b are leaf springs. As can be seen from Fig. 9a-b, each coil spring comprises a wheel 25a-b, wherein the wheels 25a-b abut the carrier element 8 such that the coil springs can be moved relative to the carrier element 8. This allows for a higher degree of freedom when the light guiding system, particularly the carrier element 8 and thus also the light-emitting element 2 comprised therein, is subjected to an external force 26, particularly in the event of a collision of a vehicle with an obstacle.

## Claims

1. Light guiding system (1a-b) for a vehicle, in particular a motor vehicle, comprising an elongated light-emitting element (2) configured to emit light,
an elastically deformable element (3a-b), and
a fixation element (5),
wherein the elastically deformable element (3a-b) abuts a part of the light-emitting element (2) and/or a part of the fixation element (5),
wherein the fixation element (5) holds the light-emitting element (2) and the deformable element (3a-b),
wherein the deformable element (3a-b) is configured to subject the light-emitting element (2) to a first tension force when the deformable element (3a-b) is in a first state and has a first restoring force,
wherein the deformable element (3a-b) is further configured to subject the light-emitting element (2) to a second tension force when the deformable element (3a-b) is in a second state and has a second restoring force,
wherein the second restoring force is higher than the first restoring force, and
wherein the second tension force is lower than the first tension force.

2. Light guiding system (1a-b) according to claim 1, wherein the deformable element (3a-b) is a spring, preferably a radial spring.

3. Light guiding system (1a-b) according to claim 2, wherein the spring is a compression spring.

4. Light guiding system (1a-b) according to any of claims 1 to 3, wherein the second tension force is 20% of the first tension force or below.

5. Light guiding system (1a-b) according to any of claims 1 to 4, wherein the light-emitting element (2) comprises a non-visible section (9a-b) and a visible section (10), wherein the deformable element (3a-b) abuts a part of the non-visible section (9a-b) of the light-emitting element (2).

6. Light guiding system (1a-b) according to any of claims 1 to 5, wherein the light-emitting element (2) comprises an elongated printed circuit board (PCB).

7. Light guiding system (1a-b) according to any of claims 1 to 6, wherein the light-emitting element (2) comprises a light-emitting diode (LED) strip.

8. Light guiding system (1a-b) according to any of claims 1 to 5, wherein the light-emitting element (2) comprises an optical fiber (6).

9. Light guiding system (1a-b) according to any of claims 1 to 8, wherein the light-emitting element (2) is coated.

10. Light guiding system (1a-b) according to any of claims 1 to 9, wherein the fixation element (5) comprises a light-blocking element (13a-b).

11. System (14a-b) comprising
a light guiding system (1a-b) according to any of claims 1 to 10, and
a vehicle component connected with the light guiding system (1a-b),
preferably wherein the vehicle component comprises a radiator grill, a bumper, a rear and/or a side part of the vehicle.

12. System (14a-b) according to claim 11, wherein the light-emitting element (2) comprises an optical fiber (6), and wherein the system (14a-b) further comprises a light source (24a) configured to introduce light into the optical fiber (6).

13. System (14a-b) according to claim 12, wherein the system (14a-b) further comprises a PCB (17a-b), and wherein the light source (24a) is mounted on a side of the PCB (17a-b) facing the optical fiber.

14. System (14a-b) according to any of claims 11 to 13, comprising a first light source (24a) and a second light source, wherein the first light source (24a) is configured to introduce light into a first end (7a) of the optical fiber (6), and the second light source is configured to introduce light into a second end (7b) of the optical fiber (6).

15. Vehicle, particularly motor vehicle, comprising a light guiding system (1a-b) according to any of claims 1 to 10 or a system (14a-b) according to any of claims 11 to 14.
